# DEMANDE DE BREVET EUROPEEN

(11) **EP 2 106 958 A1**
(43) Date de publication de la demande: **07.10.2009**
(21) Numéro de dépôt: 09155991.4
(22) Date de dépôt: 24.03.2009
(51) Int. Cl.: B60N 2/015, B60N 2/30, B60N 2/36

(54) **Dispositif de liaison entre une assise et la caisse d'un véhicule automobile, et véhicule automobile associé**

(30) Priorité: 31.03.2008 FR 0852078
(71) Demandeur: PEUGEOT CITROËN AUTOMOBILES S.A., 78140 Velizy Villacoublay (FR)
(72) Inventeur: Bauvineau, Laurent, 92160, ANTONY (FR)

(57) **Abrégé**

L'invention concerne un dispositif de liaison amovible d'une assise (3) de siège arrière de véhicule automobile à la caisse (5) du véhicule, le dispositif de liaison (1) comprenant :
- une tige (9) liée à l'une de l'assise (3) et de la caisse (5) ;
- des moyens de verrouillage amovible de la tige (9) sur l'autre de l'assise (3) et de la caisse.

Selon l'invention, les moyens de verrouillage comprennent un palier (11) de guidage en rotation de la tige (9) lié à l'autre de l'assise (3) et de la caisse (5), et des moyens (13) de blocage susceptibles d'adopter une position de verrouillage de la tige (9) dans le palier (11) dans laquelle la tige (9) n'est pas susceptible d'être dégagée du palier (11) et dans laquelle la tige (9) est libre en rotation par rapport au palier (11), les moyens de blocage (13) étant susceptibles d'adopter une position de dégagement dans laquelle la tige (9) est susceptible d'être dégagée du palier (11).

## Description

La présente invention concerne en général la fixation des sièges de véhicules automobiles.

Plus précisément, l'invention concerne selon un premier aspect un dispositif de liaison amovible d'une assise de siège de véhicule automobile à la caisse du véhicule, du type comprenant :
- une tige liée à l'une de l'assise et de la caisse ;
- des moyens de verrouillage amovible de la tige sur l'autre de l'assise et de la caisse.

Un tel dispositif de liaison est connu de US 4,978,158. Ce dispositif comporte deux tiges montées fixes dans des chapes solidaires du plancher du véhicule. II comporte également deux flasques rigidement fixées à l'assise. Les moyens de verrouillage des tiges comprennent des crans ménagés dans les flasques. Ils comprennent en outre des crochets basculant, montés sur les flasques, et susceptibles de verrouiller les tiges dans les crans.

Ce dispositif présente le défaut de ne pas permettre le basculement de l'assise autour des tiges, par exemple pour relever l'assise vers une position verticale de rangement.

Dans ce contexte, l'invention vise à proposer un dispositif de liaison qui permet à l'assise d'être à la fois relevable et démontable de la caisse.

A cette fin, l'invention porte sur un dispositif de liaison du type précité, **caractérisé en ce que** les moyens de verrouillage comprennent un palier de guidage en rotation de la tige lié à l'autre de l'assise et de la caisse, et des moyens de blocage susceptibles d'adopter une position de verrouillage de la tige dans le palier dans laquelle la tige n'est pas susceptible d'être dégagée du palier et dans laquelle la tige est libre en rotation par rapport au palier, les moyens de blocage étant susceptibles d'adopter une position de dégagement dans laquelle la tige est susceptible d'être dégagée du palier.

Le dispositif de liaison peut également présenter une ou plusieurs des caractéristiques ci-dessous, considérées individuellement ou selon toutes les combinaisons techniquement possibles :
les moyens de blocage comprennent :
   - un manchon cylindrique présentant un secteur ouvert, la tige étant engagée dans le manchon et le manchon étant engagé dans le palier, et
   - des moyens pour déplacer sélectivement le manchon par rapport au palier, le secteur ouvert du manchon en position de dégagement des moyens de blocage étant en coïncidence avec un secteur ouvert correspondant du palier, le secteur ouvert du manchon en position de verrouillage des moyens de blocage étant décalé par rapport audit secteur ouvert correspondant du palier ;
les moyens pour déplacer sélectivement le manchon par rapport au palier sont aptes à déplacer le manchon en rotation par rapport au palier, le secteur ouvert du manchon en position de verrouillage des moyens de blocage étant décalé angulairement par rapport audit secteur ouvert correspondant du palier ;
le palier, le manchon et la tige sont coaxiaux, le manchon comprenant des premier et second tronçons axiaux, ledit secteur ouvert étant ménagé dans le premier tronçon et s'étendant sur un secteur angulaire de plus de 120°, le second tronçon axial ne présentant pas de secteur ouvert sur un secteur angulaire de plus de 120 ° ;
le palier comprend des premier et second segments axiaux, ledit secteur ouvert correspondant étant ménagé dans le premier segment axial et s'étendant sur un secteur angulaire de plus de 120°, le second segment axial ne présentant pas de secteur ouvert sur un secteur angulaire de plus de 120°, les premier et second tronçons axiaux du manchon étant engagés respectivement dans les premier et second segments axiaux du palier ;
les moyens pour déplacer sélectivement le manchon par rapport au palier comprennent une poignée solidaire du second tronçon du manchon ;
le dispositif de liaison comprend des moyens pour bloquer la poignée par rapport au palier dans une position telle que le secteur ouvert du manchon est décalé angulairement par rapport audit secteur ouvert correspondant du palier.

Selon un second aspect, l'invention porte sur un véhicule automobile comprenant une assise de siège et deux dispositifs de liaison présentant les caractéristiques ci-dessus.

Le véhicule automobile peut également présenter une ou plusieurs des caractéristiques ci-dessous :
le palier de chaque dispositif de liaison est rigidement fixé sur le plancher du véhicule, les tiges des deux dispositifs de liaison étant deux extrémités opposées et alignées d'une même bielle montée à rotation sur l'assise ;
le véhicule comporte une poignée unique solidaire des manchons des deux dispositifs de liaison.

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 est une vue en perspective montrant une partie de l'assise du véhicule automobile, et le dispositif de liaison de l'assise au plancher du véhicule à l'état éclaté ;
- la figure 2 est une vue en perspective d'une zone de la figure 1, montrant l'extrémité de la bielle de liaison entre l'assise et le plancher, un palier de guidage et un manchon de blocage disposé dans le palier, l'extrémité de la bielle n'étant pas encore engagé dans le manchon ;
- la figure 3 est une vue similaire à celle de la figure 2, montrant l'extrémité de la bielle engagée dans le manchon, le manchon étant dans une position telle que ladite extrémité n'est pas verrouillée par rapport au palier ; et
- la figure 4 est une vue similaire à celle de la figure 3, montrant le manchon de blocage dans une position telle que l'extrémité de la bielle est verrouillée dans le palier de guidage.

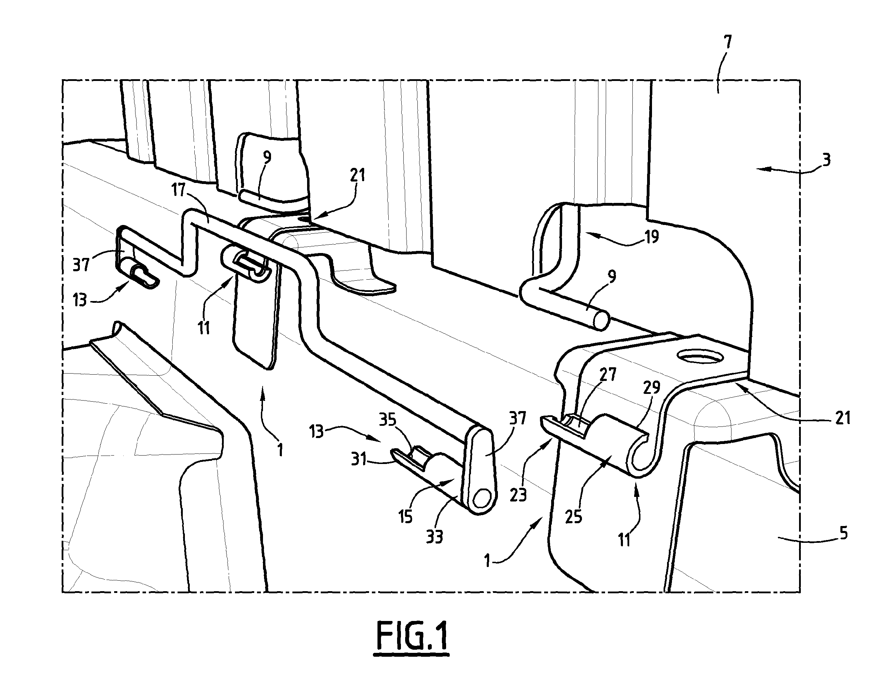

Le dispositif de liaison 1 représenté à l'état éclaté sur la figure 1 est prévu pour lier l'assise 3 d'un siège ou d'une banquette arrière du véhicule automobile au plancher 5. L'assise 3 est liée au plancher 5 par deux dispositifs de fixation 1 identiques l'un à l'autre. Seul l'un des deux dispositifs sera détaillé ci-après.

Les deux dispositifs 1 autorisent un basculement de l'assise 3 par rapport au plancher 5 autour d'un axe transversal, et permettent également de démonter l'assise 3 du plancher.

L'assise 3 comporte typiquement une armature rigide 7 et un coussin en mousse (non représenté) rigidement fixé sur l'armature 7. Seule une partie de la paroi verticale avant de l'armature 7 est visible sur la figure Chaque dispositif de liaison 1 comprend :
- une tige transversale 9 liée à l'armature 7 ;
- un palier 11 de guidage en rotation de la tige rigidement fixé sur le plancher du véhicule ;
- des moyens 13 de blocage de la tige 9 dans le palier 11.

Les moyens de blocage 13 comportent un manchon cylindrique 15 engagé dans le palier 11, et une poignée 17 pour déplacer sélectivement le manchon 15 par rapport au palier 11.

Les tiges 9 des deux dispositifs de liaison 1 sont constituées par les deux extrémités opposées d'une bielle 19. La bielle 19 est montée à rotation sur l'armature 7, autour d'un axe transversal non représenté. Les deux extrémités 9 sont alignées transversalement.

Le palier 11 est par exemple constitué d'une extrémité roulée d'une ferrure 21. La ferrure 21 est rigidement fixée sur le plancher 5 par une extrémité opposée au palier 11, par tous moyens appropriés tels que des vis ou des cordons de soudure.

Les paliers 11 des deux dispositifs de fixation 1 sont coaxiaux et d'axe transversal.

Le palier 11 comprend un premier segment axial 23 vers l'intérieur du véhicule, et un second segment axial 25 vers l'extérieur du véhicule. Le premier segment 23 est semi cylindrique et comporte un secteur ouvert 27 tourné vers le haut. Le secteur ouvert s'étend sur un secteur angulaire d'environ 180°. Ainsi, le premier segment est ouvert vers le haut et fermé vers le bas.

Le second segment 25 est sensiblement cylindrique et ne comporte pas de secteur ouvert s'étendant sur un secteur angulaire ouvert de plus de 120°. Il est fermé sur la quasi-totalité de sa périphérie. II peut comporter un interstice de faible largeur angulaire, typiquement entre le bord libre transversal 29 de la ferrure et une partie courante de ladite ferrure.

Le palier 11 est ouvert à ses deux extrémités axiales.

Le manchon 15 présente une forme générale sensiblement cylindrique, de section circulaire et d'axe transversal. II comprend un premier tronçon axial 31 tourné vers l'intérieur du véhicule, et un second tronçon axial 33 tourné vers l'extérieur du véhicule. Le premier tronçon axial 31 est creux et semi cylindrique. II comporte un secteur ouvert 35 s'étendant sur un secteur angulaire d'environ 180°. Le secteur 35 est ouvert vers le haut. Ainsi, le tronçon 31 est fermé vers le bas et ouvert vers le haut.

Le second tronçon 33 est cylindrique et de préférence plein.

La poignée 17 est d'orientation transversale. Elle est fixée par ses deux extrémités opposées aux deux tronçons 33 des manchons de blocage des deux dispositifs de fixation, par l'intermédiaire de flasques 37. Les deux flasques 37 sont d'orientation sensiblement perpendiculaire à la direction transversale.

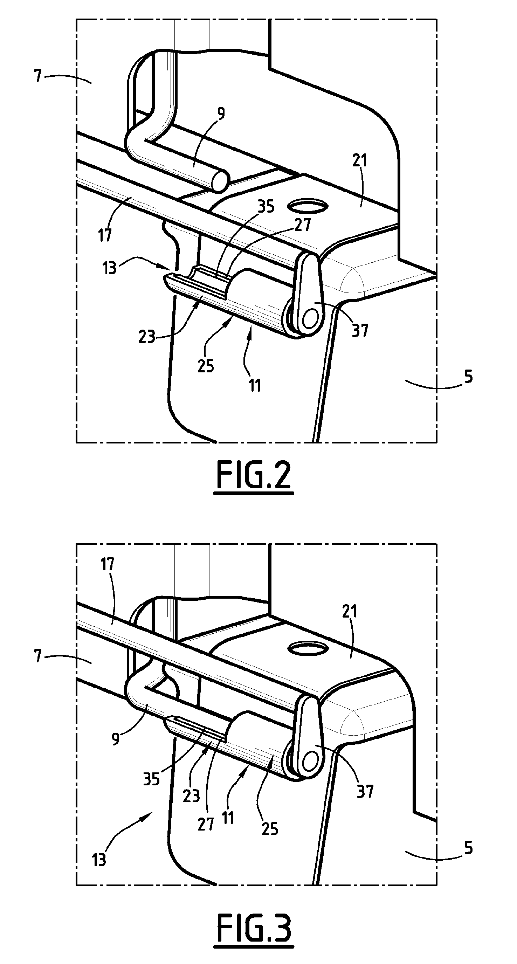

La procédure d'assemblage du dispositif de liaison va maintenant être détaillée, en référence aux figures 2 à 4.

Initialement, on considère que la bielle 19 est liée à l'armature 7 de l'assise.

Les ferrures 21 sont d'abord fixées au plancher 5 du véhicule. On introduit ensuite les manchons 15 dans les deux paliers 11. Les manchons 15 sont orientés de telle sorte que le premier tronçon du manchon est engagé dans le premier segment du palier, et le second tronçon du manchon est engagé dans le second segment du palier. Par ailleurs, le manchon est orienté angulairement de telle sorte que le secteur ouvert 35 du manchon soit en coïncidence avec le secteur ouvert 27 du palier.

Une fois les manchons en place dans les paliers, la poignée 17 est rigidement fixée aux seconds tronçons 33 des deux manchons. Les flasques 37 sont placées en regard de l'extrémité axiale ouverte du palier tournée vers l'extérieur du véhicule. Puis, les flasques 37 sont rigidement fixées aux tronçons 33 des manchons, par tous moyens appropriés tels que des vis engagées dans un orifice taraudé du manchon à travers les flasques 37.

La poignée 17 est montée de manière à être placée sensiblement dans un plan vertical, au-dessus des paliers 11.

On se trouve alors dans la situation de la figure 2.

Puis, les deux extrémités 9 de la bielle sont engagées par le haut à l'intérieur des premiers tronçons 31 des manchons. Ceci est possible du fait que les secteurs ouverts 27 et 35 des paliers 11 et des manchons 15 sont en coïncidence et sont tournées vers le haut. On se trouve alors dans la situation de la figure 3.

Ensuite, un utilisateur fait pivoter les manchons autour de l'axe transversal par rapport aux paliers de guidage. Pour cela, il saisit la poignée 17 et la fait pivoter vers l'avant et vers le bas. La poignée 17 pivote d'environ 180° et vient se placer sensiblement à la verticale sous les paliers 11. La poignée 17 entraîne en rotation les manchons 15, les secteurs fermés des tronçons 31 des manchons venant se placer au-dessus des extrémités 9. Les secteurs ouverts 35 et 27 ne sont alors plus en coïncidence.

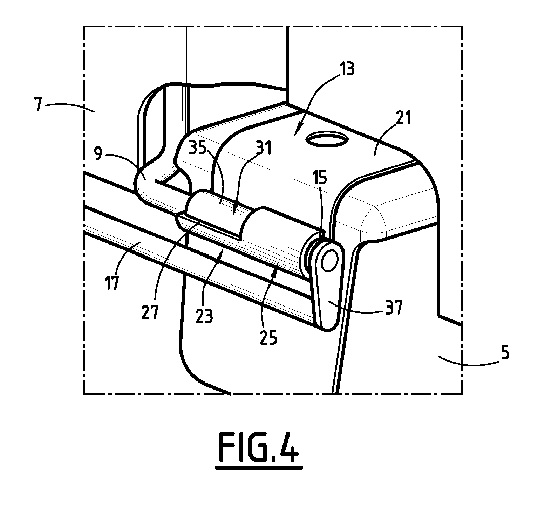

On se trouve alors dans la situation de la figure 4. Dans cette situation, les extrémités 9 sont libres en rotation à l'intérieur des paliers 11. En revanche, les extrémités 9 ne peuvent plus être dégagées des paliers 11 par le haut.

Dans cette position, il est possible de faire basculer l'assise 3 vers l'avant autour d'un axe transversal défini par les extrémités 9 de la bielle, en vue d'amener cette assise dans une position dressée contre les dossiers des sièges avant.

De manière avantageuse, le dispositif de liaison peut comprendre des moyens pour bloquer la poignée 17 par rapport aux paliers 11 dans la position de la figure 4, c'est-à-dire dans une position telle que les secteurs ouverts des manchons ne sont pas placés en coïncidence avec les secteurs ouverts des paliers.

Pour démonter l'assise et la séparer du plancher du véhicule, on procède selon la séquence inverse de celle qui a été décrite ci-dessus. On fait pivoter la poignée 17 vers le haut, de manière à faire tourner les manchons par rapport aux paliers. Quand la poignée est ramenée au-dessus des paliers 11, les secteurs ouverts des manchons sont en coïncidence avec les secteurs ouverts des paliers, et il est possible de dégager les extrémités 9 de la bielle hors des paliers 11. L'assise 3 peut alors être séparée du plancher.

Le dispositif de liaison décrit ci-dessus présente de multiples avantages.

Du fait que les moyens de verrouillage comprennent un palier de guidage en rotation de la tige lié à l'autre de l'assise et de la caisse, et des moyens de blocage susceptibles d'adopter une position de verrouillage de la tige dans le palier dans laquelle la tige n'est pas susceptible d'être dégagée du palier et dans laquelle la tige est libre en rotation par rapport au palier, les moyens de blocage étant susceptibles en outre d'adopter une position de dégagement dans laquelle la tige est susceptible d'être dégagée du palier, l'assise est démontable de la caisse du véhicule. En outre, quand elle est liée à la caisse du véhicule, elle est basculante et peut être relevée.

De manière particulièrement commode, une poignée unique permet de déverrouiller les deux dispositifs de liaison de l'assise à la caisse.

L'ensemble constitué de la poignée et des deux manchons de blocage est de masse réduite. Quand la poignée et les manchons sont réalisés en plastique, ils ont ensemble un poids d'environ 100 grammes.

Le dispositif de liaison est d'encombrement particulièrement réduit. L'encombrement longitudinal du dispositif de liaison correspond sensiblement à l'encombrement longitudinal des paliers. Il peut être intégré dans le revêtement insonorisant recouvrant le plancher à l'avant de l'assise des sièges arrière.

Par rapport à un dispositif de liaison autorisant seulement un basculement de l'assise par rapport à la caisse du véhicule, les seules pièces ajoutées sont la poignée et les deux manchons. Le surcoût lié à la fonctionnalité consistant à rendre l'assise démontable de la caisse du véhicule est donc particulièrement réduit.

Le dispositif de liaison ci-dessus peut présenter de multiples variantes.

Ainsi, la tige peut ne pas être liée à l'assise mais être liée à la caisse du véhicule. Dans ce cas, le palier est lié à l'assise du siège arrière.

Le dispositif de liaison peut être utilisé pour lier l'assise à un autre point du véhicule que le plancher.

Dans un mode de réalisation non préféré, le manchon cylindrique peut être déplacé axialement, et non être déplacé en rotation, en vue de masquer le secteur ouvert du palier à travers lequel peut être engagée et dégagée la tige.

Le secteur ouvert du palier n'est pas forcément tourné vers le haut. II peut être tourné vers l'avant, ou être tourné dans une orientation intermédiaire.

Les secteurs ouverts du palier et/ou du manchon ne couvrent pas nécessairement un secteur angulaire de 180°. Ils peuvent couvrir un secteur angulaire inférieur à 180°, par exemple un secteur compris entre 120 et 180°, ou un secteur supérieur à 180°. Dans ce cas, la tige doit pouvoir être engagée à force dans le manchon.

La poignée unique permettant de verrouiller et de déverrouiller les tiges des deux dispositifs de liaison de l'assise peut être remplacée par deux poignées permettant chacune de verrouiller et de déverrouiller la tige d'un des dispositifs de liaison.

Le secteur ouvert du palier peut être ménagé non pas dans le segment de ce palier tourné vers l'intérieur du véhicule, mais dans le secteur tourné vers l'extérieur du véhicule. L'orientation du manchon est alors inversée. Dans ce cas, les extrémités de la bielle de liaison entre l'assise et le plancher pointent vers l'intérieur du véhicule et non vers l'extérieur du véhicule.

La course angulaire de verrouillage / déverrouillage de la poignée peut être inférieure à 180°. Elle peut par exemple être égale à 90° ou toute autre valeur angulaire permettant d'assurer un blocage suffisant des tiges dans les paliers.

Le dispositif de liaison peut être dépourvu de moyens pour fixer la poignée par rapport au palier dans la position de blocage des tiges dans les paliers. En effet, la poignée est stabilisée dans sa position basse sous l'effet de son propre poids.

L'assise peut être liée au plancher du véhicule par un dispositif unique de liaison, ou par plus de deux dispositifs de liaison, par exemple trois dispositifs ou plus.

## Revendications

1. Dispositif de liaison amovible d'une assise (3) de siège de véhicule automobile à la caisse (5) du véhicule, le dispositif de liaison (1) comprenant :
- une tige (9) liée à l'une de l'assise (3) et de la caisse (5) ;
- des moyens de verrouillage amovible de la tige (9) sur l'autre de l'assise (3) et de la caisse ;
**caractérisé en ce que** les moyens de verrouillage comprennent un palier (11) de guidage en rotation de la tige (9) lié à l'autre de l'assise (3) et de la caisse (5), et des moyens (13) de blocage susceptibles d'adopter une position de verrouillage de la tige (9) dans le palier (11) dans laquelle la tige (9) n'est pas susceptible d'être dégagée du palier (11) et dans laquelle la tige (9) est libre en rotation par rapport au palier (11), les moyens de blocage (13) étant susceptibles d'adopter une position de dégagement dans laquelle la tige (9) est susceptible d'être dégagée du palier (11) ;

2. Dispositif de liaison selon la revendication 1, **caractérisé en ce que** les moyens de blocage (13) comprennent :
- un manchon cylindrique (15) présentant un secteur ouvert (35), la tige (9) étant engagée dans le manchon (15) et le manchon (15) étant engagé dans le palier (11), et
- des moyens (17) pour déplacer sélectivement le manchon (15) par rapport au palier (11), le secteur ouvert (35) du manchon (15) en position de dégagement des moyens de blocage étant en coïncidence avec un secteur ouvert (27) correspondant du palier (11), le secteur ouvert (35) du manchon (15) en position de verrouillage des moyens de blocage étant décalé par rapport audit secteur ouvert (27) correspondant du palier (11).

3. Dispositif de liaison selon la revendication 2, **caractérisé en ce que** les moyens (17) pour déplacer sélectivement le manchon (15) par rapport au palier (11) sont aptes à déplacer le manchon (15) en rotation par rapport au palier (11), le secteur ouvert (35) du manchon (15) en position de verrouillage des moyens de blocage étant décalé angulairement par rapport audit secteur ouvert (27) correspondant du palier (11).

4. Dispositif de liaison selon la revendication 3, **caractérisé en ce que** le palier (11), le manchon (15) et la tige (9) sont coaxiaux, le manchon (15) comprenant des premier et second tronçons axiaux (31, 33), ledit secteur ouvert (35) étant ménagé dans le premier tronçon (31) et s'étendant sur un secteur angulaire de plus de 120°, le second tronçon (33) axial ne présentant pas de secteur ouvert sur un secteur angulaire de plus de 120°.

5. Dispositif de liaison selon la revendication 4, **caractérisé en ce que** le palier (11) comprend des premier et second segments axiaux (23, 25), ledit secteur ouvert correspondant (27) étant ménagé dans le premier segment axial (23) et s'étendant sur un secteur angulaire de plus de 120°, le second segment axial (25) ne présentant pas de secteur ouvert sur un secteur angulaire de plus de 120°, les premier et second tronçons axiaux (31, 33) du manchon (15) étant engagés respectivement dans les premier et second segments axiaux (23, 25) du palier (11).

6. Dispositif de liaison selon la revendication 4 ou 5, **caractérisé en ce que** les moyens (17) pour déplacer sélectivement le manchon (15) par rapport au palier (11) comprennent une poignée (17) solidaire du second tronçon (33) du manchon (15).

7. Dispositif de liaison selon la revendication 6, **caractérisé en ce qu'**il comprend des moyens pour bloquer la poignée (17) par rapport au palier (11) dans une position telle que le secteur ouvert (35) du manchon (15) est décalé angulairement par rapport audit secteur ouvert correspondant (27) du palier (11).

8. Véhicule automobile comprenant :
- une assise (3) de siège;
- deux dispositifs de liaison (1) selon l'une quelconque des revendication précédentes.

9. Véhicule automobile selon la revendication 8, **caractérisé en ce que** le palier (11) de chaque dispositif de liaison (1) est rigidement fixé sur le plancher (5) du véhicule, les tiges (9) des deux dispositifs de liaison (1) étant deux extrémités opposées et alignées d'une même bielle (19) montée à rotation sur l'assise (3).

10. Véhicule automobile selon la revendication 8 ou 9, **caractérisé en ce qu'**il comporte une poignée (17) unique solidaire des manchons (15) des deux dispositifs de liaison (1).
